Europäisches Patentamt

European Patent Office

Office européen des brevets

(11) Veröffentlichungsnummer: **0 331 069**
**A1**

## (12) EUROPÄISCHE PATENTANMELDUNG

(21) Anmeldenummer: **89103391.2**

(22) Anmeldetag: **27.02.89**

(51) Int. Cl.⁴: **B66C 1/12 , F16G 15/06**

(30) Priorität: **03.03.88 DE 8802851 U**

(43) Veröffentlichungstag der Anmeldung:
**06.09.89 Patentblatt 89/36**

(84) Benannte Vertragsstaaten:
**AT CH DE FR IT LI SE**

(71) Anmelder: **EISEN- UND DRAHTWERK ERLAU**
**AKTIENGESELLSCHAFT**
**Erlau 16**
**D-7080 Aalen(DE)**

(72) Erfinder: **Müller, Anton**
**Brandweg 9**
**D-7080 Aalen-Unterkochen(DE)**

(74) Vertreter: **Jackisch-Kohl, Anna-Katharina et al**
**Patentanwälte Jackisch-Kohl & Kohl**
**Stuttgarter Strasse 115**
**D-7000 Stuttgart 30(DE)**

(54) **Aufhängekopf für Anschlagmittel.**

(57) Der Aufhängekopf hat einen Gliedkörper mit einer Einhängeöffnung (2) und einen Anschlußteil (3) zur Aufnahme von Kettengliedern (4). Das Anschlußteil (3) weist nebeneinander liegende, quer zur Gliedkörperebene verlaufende, randoffene Stecköffnungen (9 bis 11) für die anzuschließenden Kettenglieder (4) auf. Sämtliche Stecköffnungen (9 bis 11) werden von einem Sicherungsteil (32) durchsetzt. Der Aufhängekopf weist nur wenige Einzelteile auf und kann einfach und kostengünstig hergestellt werden.

FIG.1

EP 0 331 069 A1

## Aufhängekopf für Anschlagmittel

Die Erfindung betrifft einen Aufhängekopf für Anschlagmittel nach dem Oberbegriff des Anspruches 1.

Bekannte Aufhängeköpfe dieser Art dienen zum Anschließen von Ein- oder Mehrstrangketten, also einem oder mehreren Kettensträngen. Sie bestehen aus einem ovalen Ringglied, in dessen Gliedkörper ein oder zwei Schäkel als Anschlußteile für einen oder einen ersten und einen zweiten Kettenstrang einhängt sind. Bei Aufhängeköpfen, die für 3 oder 4 -Strangketten vorgesehen sind, sind in den Gliedkörper 2 ringförmige Zwischenglieder eingehängt, in die jeweils ein oder zwei Schäkel eingehängt sind.

Diese Aufhängeköpfe haben den Nachteil, daß sie wegen der notwendigen Schäkel und/oder Zwischenglieder aus vielen Einzelteilen bestehen, und daß ihre Fertigungs-und Montagekosten relativ hoch sind. Außerdem ist die Mindestbauhöhe dieser bekannten Aufhängeköpfe infolge der vielen Einzelteile groß und vorgegeben. Besonders bei relativ groß dimensionierten Aufhängeköpfen müssen schon herstellungsbedingt größere Toleranzen in Kauf genommen werden. Dies führt dazu, daß die angeschlossenen Kettenstränge ungleich lang sind, so daß keine gleichmäßige Belastung der Kettenstränge gewährleistet ist. Nachteilig ist ferner, daß die Einzelteile seperat hergestellt und auf Lager gehalten werden müssen.

Der Erfindung liegt die Aufgabe zugrunde, einen Aufhängekopf dieser Art so auszubilden, daß er konstruktiv einfach ausgebildet ist, nur aus wenigen Einzelteilen besteht, und so gestaltet ist, daß Kettenstränge in einfacher Weise mit gleicher Länge angeschlossen werden können.

Diese Aufgabe wird bei einem Aufhängekopf der gattungsbildenden Art erfindungsgemäß mit den kennzeichnenden Merkmalen des Anspruches 1 gelöst.

Infolge der erfindungsgemäßen Ausbildung besteht der Aufhängekopf nur aus dem Gliedkörper mit dem Anschlußteil und dem Sicherungsteil. In den Stecköffnungen können die Kettenstränge mit einem Kettenglied mittels des Sicherungsteiles direkt befestigt werden. Schäkel und Zwischenglieder sind bei dem erfindungsgemäßen Aufhängekopf überflüssig. Die Kettenglieder der Kettenstränge werden mit dem Sicherungsteil einfach gesichert. Werden mehrere Kettenstränge angeschlossen, dann werden die Kettenglieder in die entsprechenden Stecköffnungen gesteckt und mit dem einzigen Sicherungsteil am Anschlußteil befestigt. Infolge der wenigen Einzelteile kann der erfindungsgemäße Aufhängekopf einfach und kostengünstig hergestellt werden. Durch den einzigen Sicherungsteil ist gewährleistet, daß die Kettenstränge immer gleich lang sind und damit auch gleich belastet werden. Der Aufhängekopf kann besonders vorteilhaft als Schmiedeteil mit hoher Genauigkeit gefertigt werden, so daß die Fertigungstoleranzen minimal sind. Dies trägt ebenfalls wesentlich dazu bei, daß die eingehängten Kettenstränge gleich lang sind.

Weitere Merkmale der Erfindung ergeben sich aus den weiteren Ansprüchen, der Beschreibung und den Zeichnungen.

Die Erfindung wird nachstehend anhand eines in den Zeichnungen dargestellten Ausführungsbeispieles näher beschrieben. Es zeigt:

Fig.1 einen erfindungsgemäßen Aufhängekopf in Seitenansicht,

Fig.2 einen Schnitt längs der Linie II-II in Fig.1.

Der dargestellte Aufhängekopf weist einen im wesentlichen ringförmigen Gliedkörper mit einer Einhängeöffnung 2 und einem Anschlußteil 3 auf. Die Einhängeöffnung 2 dient zum Anschließen des Aufhängekopfes an ein Hebezeug, während an das Anschlußteil 3 Kettenglieder 4 von als Anschlagmittel vorgesehenen Kettensträngen 5 angeschlossen werden können.

Der Gliedkörper 1 weist zueinander parallele Längsschenkel 6,7 auf, die an einer Stirnseite des Gliedkörpers abgerundet in einen Quersteg 8 übergehen. Dem Quersteg 8 liegt der Anschlußteil 3 gegenüber, der sich über die ganze Breite des Gliedkörpers 1 erstreckt und in Seitenansicht etwa rechteckigen Umriß hat.

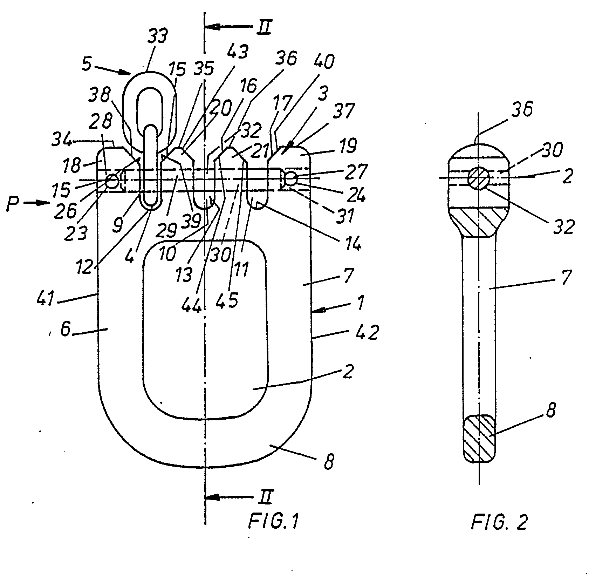

Wie insbesondere Fig.2 zeigt, ist die Dicke des Anschlußteiles 3 nahezu doppelt so groß wie die des übrigen Gliedkörpers 1. Der Anschlußteil 3 weist im Ausführungsbeispiel drei mit gleichem Abstand nebeneinander liegende Stecköffnungen 9 bis 11 auf, die nach außen vom Quersteg abgewandt randoffen ausgebildet sind. Die Stecköffnungen 9 bis 11 sind vorzugsweise jeweils gleich ausgebildet und dienen zur Aufnahme der Kettenglieder 4 des zugehörigen Kettenstranges 5. Die lichte Weite und der abgerundete Boden 12 bis 14 der Stecköffnungen sind an die Dicke und an die abgerundeten Außenseiten des zugehörigen Kettengliedes angepaßt. Die Stecköffnungen 9 bis 11 erweitern sich in Seitenansicht gesehen, in ihren vorderen Einführungsbereichen 15 bis 17 trichterförmig nach außen. Durch die Stecköffnungen 9 bis 11 ist der Anschlußteil etwa kammartig ausgebildet, wobei endseitige und mittlere, zahnartige Begrenzungsabschnitte 18,19 und 20,21 gebildet sind. In Ansicht gemäß Pfeil P in Fig.1 sind dies Begrenzungsabschnitte 18 bis 21 an ihrer Stirnseite jeweils teilkreisförmig abgerundet (Fig.2). In den endseitigen Begrenzungsabschnitten 18,19 ist jeweils eine senkrechte zur Längsrichtung des Anschlußteiles 3 verlaufende Bohrung 23,24 für Sicherungsteile 26,27, vorzugsweise Spannhülsen, vorgesehen. Die Bohrungen 23,24 liegen etwa in halber Breite der Begrenzungsabschnitte 18,19. Diese Begrenzungsabschnitte und die Begrenzungsabschnitte 20,22 weisen in Längsrichtung des Anschlußteiles miteinander fluchtende Durchgangsbohrungen 28 bis 31 auf, in denen ein Sicherungsbolzen 32 angeordnet ist. Die miteinander fluchtenden Durchgangsbohrungen 28 bis 31 haben etwa doppelt so große lichte Weite wie die Querbohrungen 23,24 und sind so angeordnet, daß sie das eingehängte Kettenglied 4 des Kettenstranges 5 durchsetzen. Außerdem liegen die Durchgangsbohrungen im Bereich außerhalb der erweiterten Endabschnitte 15 bis 17, so daß das nächst folgende, in das Kettenglied 4 eingehängte Kettenglied 33 des Kettenstranges 5 bei montiertem Kettenstrang in die erweiterten Abschnitte ragt. Dadurch kann der Kettenstrang einfach montiert werden und hat eine ausreichende Beweglichkeit gegenüber dem Aufhängekopf.

Die Stirnseiten 34 bis 37 der Begrenzungsabschnitte 18 bis 21 sind quer zur Achsrichtung des Sicherungsbolzen 32 teilkreisförmig gekrümmt (Fig.2). Die Stirnseiten 35,36 der mittleren Begrenzungsabschnitte 29,30 sind wesentlich schmaler als die der Begrenzungsabschnitte 18,19. An die Stirnseiten 34 und 37 schließt stumpfwinklig jeweils eine Schrägfläche 38 und 40 an. Auf der gegenüberliegenden Seite gehen die Stirnseiten 34 und 37 jeweils gekrümmt in die voneinander abgewandten Außenseiten 41 und 42 der Längsschenkel 6 und 7 des Gliedkörpers 1 über. An die Stirnseiten 35 und 36 der beiden mittleren Begrenzungsabschnitte 29 und 30 schließen an beiden Enden stumpfwinklig Schrägflächen 39,43 und und 44,45 an. Infolge dieser Ausbildung nimmt die Breite der Begrenzungsabschnitte 18 bis 21 in Richtung auf ihr freies Ende ab. Die Neigung der einander gegenüberliegenden Schrägflächen 38 bis 40, 43 bis 45 der Begrenzungsabschnitte 18 bis 21 ist an die Krümmung der benachbarten Gliedabschnitte der Kettenglieder 33 angepaßt. Vorzugsweise verlaufen die Schrägflächen 38 bis 40, 43 bis 45 unter einem Winkel von 90° zueinander. Bevor die Kettenstränge 5 am Aufhängekopf befestigt werden, ist bereits eines der Sicherungsteile 26,27 in der zugehörigen Querbohrung 23 bzw. 24 befestigt. Anschließend kann in die Stecköffnungen 9 bis 11 ein Kettenglied eines Kettenstranges 5 gesteckt und mit dem Sicherungsbolzen 32 in der Stecköffnung befestigt werden. Hierzu wird der Sicherungsbolzen 32 durch die miteinander fluchtenden Durchgangsbohrungen 28 bis 31 gesteckt, bis er an dem bereits montierten Sicherungsteil zur Anlage kommt. Danach wird der andere Sicherungsteil in die noch freie Querbohrung eingeschlagen, so daß der Sicherungsbolzen 32 einwandfrei gegen Lösen gesichert ist.

An den Aufhängekopf können in der dargestellten Ausführung maximal drei Kettenstränge angeschlossen werden. Wenn an den Aufhängekopf nur zwei Kettenstränge angeschlossen werden, dann werden diese in die beiden äußeren Stecköffnungen 9 und 11 mit ihrem endseitigen Kettenglied 4 gesteckt und dann, wie oben beschrieben, durch den Sicherungsbolzen 32 gemeinsam gesichert. Das gleiche gilt zum Verbinden mit drei Kettensträngen, wobei dann jeweils ein Kettenglied eines Kettenstranges in die zugehörige Stecköffnung gesteckt und mit dem Sicherungsbolzen 32 gesichert wird.

Nach dem Einführen und Verbinden der Kettenstränge 5 mit dem Aufhängekopf und deren Sicherung über den Sicherungsbolzen 32 ist der Aufhängekopf voll funktionsfähig. Er kann selbstverständlich auch als Endglied für eine Anschlagkette verwendet werden. Durch die unmittelbare Verbindung der Kettenstränge mit dem Aufhängekopf entfallen Verbindungsglieder, so daß der Aufhängekopf eine sehr geringe Bauhöhe und damit einen sehr geringen Platzbedarf hat. Die in den Stecköffnungen 9 bis 11 liegenden freien Bolzenabschnitte bestimmen zusammen mit der Breite der nutförmigen Stecköffnungen die Tragfähigkeit der Kettenstränge. Durch den einzigen Sicherungsbolzen 32 ist es möglich, daß die Kettenstränge immer gleich lang sind. Damit ist auch gewährleistet, daß jeder Kettenstrang gleich belastet wird.

Zum Anschließen weiterer Kettenstränge kann ein entsprechend breiterer Aufhängekopf mit weiteren Stecköffnungen verwendet werden.

Vorzugsweise ist der Aufhängekopf als Schmiedeteil ausgeführt, der mit hoher Genauigkeit hergestellt werden kann. Dies trägt ebenfalls dazu bei, daß die eingehängten Kettenstränge gleich lang sind und damit gleich belastet werden können. Anstelle der Sicherungsteile 26,27 kann der Sicherungsbolzen 32 so ausgebildet sein, daß er mit Preßsitz in den Durchgangsbohrungen 28 bis 31 sitzt.

## Ansprüche

1. Aufhängekopf für Anschlagmittel, insbesondere für Ein- oder Mehrstrangketten, mit einem Gliedkörper, der eine Einhängeöffnung zur Aufnahme an einem Hebezeug oder dergleichen hat, und mit mindestens einem Anschlußteil zur Aufnahme eines Kettengliedes des anzuschließenden Kettenstranges, das mit mindestens einem Sicherungsglied am Anschlußteil befestigt ist,
dadurch gekennzeichnet, daß das Anschlußteil (3) nebeneinander liegende, quer zur Gliedkörperebene verlaufende randoffene Stecköffnungen (9 bis 11) für die anzuschließenden Kettenglieder (4) hat, und daß das Sicherungsteil (32) sämtliche Stecköffnungen (9 bis 11) durchsetzt.

2. Aufhängekopf nach Anspruch 1,
dadurch gekennzeichnet, daß das Anschlußteil (3) kammartig mit zahnartigen Begrenzungsabschnitten (18 bis 21) ausgebildet ist.

3. Aufhängekopf nach Anspruch 1 oder 2,
dadurch gekennzeichnet, daß die Stecköffnungen (9 bis 11), quer zur Gliedkörperlängsmittelebene gesehen, durch einander benachbarte Begrenzungsabschnitte (18 bis 21) begrenzt sind.

4. Aufhängekopf nach einem der Ansprüche 1 bis 3,
dadurch gekennzeichnet, daß die Begrenzungsabschnitte (18 bis 21) in Seitenansicht des Aufhängekopfes, vorzugsweise dachförmig verjüngte freie Enden haben.

5. Aufhängekopf nach einem der Ansprüche 1 bis 4,
dadurch gekennzeichnet, daß die Stirnseiten (34 bis 37) der Begrenzungsabschnitte (18 bis 21) quer zur Achsrichtung des Sicherungsteiles (32) teilkreisförmig gerundet sind.

6. Aufhängekopf nach einem der Ansprüche 1 bis 5,
dadurch gekennzeichnet, daß die Breite der Stecköffnungen (9 bis 11) der Dicke des anzuschließenden Kettengliedes (4) entspricht.

7. Aufhängekopf nach einem der Ansprüche 1 bis 6,
dadurch gekennzeichnet, daß die Stecköffnungen (9 bis 11) gleiche Breite haben.

8. Aufhängekopf nach einem der Ansprüche 1 bis 7,
dadurch gekennzeichnet, daß mindestens drei mit gleichem Abstand nebeneinander liegende Stecköffnungen (9 bis 11) vorgesehen sind.

9. Aufhängekopf nach einem der Ansprüche 1 bis 8,
dadurch gekennzeichnet, daß in den endseitigen Begrenzungsabschnitten (18,19) Axialsicherungsglieder (26,27),vorzugsweise Spannhülsen für den Sicherungsteil (32) angeordnet sind.

FIG.1

FIG. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-B-1 675 833 (THIELE) * Insgesamt * | 1-8 | B 66 C 1/12 F 16 G 15/06 |
| Y | | 9 | |
| | --- | | |
| Y | DE-A-3 124 941 (BECKER-PRÜNTE) * Zusammenfassung; Figur 1 * | 9 | |
| | --- | | |
| X | DE-B-1 425 411 (THIELE) * Insgesamt * | 1-7 | |
| | --- | | |
| A | GB-A-2 089 930 (THIELE) | | |
| | --- | | |
| A | GB-A-2 000 847 (THIELE) | | |
| | --- | | |
| A | GB-A-2 001 036 (THIELE) | | |
| | --- | | |
| A | FR-A-2 249 267 (THIELE) | | |
| | ----- | | |

RECHERCHIERTE SACHGEBIETE (Int. Cl.4)

B 66 C
F 16 G

Der vorliegende Recherchenbericht wurde für alle Patentansprüche erstellt

| Recherchenort | Abschlußdatum der Recherche | Prüfer |
|---|---|---|
| DEN HAAG | 17-05-1989 | VAN DEN BERGHE E.J.J. |